# EUROPÄISCHE PATENTSCHRIFT

(11) **EP 3 315 231 B1**
(45) Veröffentlichungstag und Bekanntmachung des Hinweises auf die Patenterteilung: **05.05.2021**
(21) Anmeldenummer: 16195762.6
(22) Anmeldetag: 26.10.2016
(51) Int. Cl.: B23B 5/16

(54) **WERKZEUG ZUR BEARBEITUNG EINES ROHRENDES UND VERFAHREN DAFÜR**
WORKTOOL FOR MACHINING A TUBE END
OUITL D'USINAGE D'EXTRÉMITÉ DE TUBE

(43) Veröffentlichungstag der Anmeldung: 02.05.2018
(73) Patentinhaber: Geberit International AG, 8645 Jona (CH)
(72) Erfinder: ALDER, Martin, 8805 Richterswil (CH); STALDER, Valentin, 8620 Wetzikon (CH)
(74) Vertreter: Frischknecht, Harry Ralph

(56) Entgegenhaltungen:
- EP-A1- 2 942 134
- DE-B3-102006 025 812
- US-A- 4 114 484

## Beschreibung

### TECHNISCHES GEBIET

Die vorliegende Erfindung betrifft ein Werkzeug zur spanabhebenden Bearbeitung eines Rohrendes gemäss dem Oberbegriff von Anspruch 1 sowie ein Verfahren nach Anspruch 15.

### STAND DER TECHNIK

Aus dem Stand der Technik sind Bearbeitungswerkzeuge für Rohrenden bekannt geworden. Typischerweise dienen derartige Werkzeuge zum Vorbereiten eines Rohrendes eines Kunststoffrohrs im Hinblick auf eine Verschweissung mit einem Fitting oder einem anderen Rohrende.

Solche Werkzeuge sind beispielsweise aus der EP 2 368 656, der EP 2 942 134 und der EP 0 740 974 bekannt geworden. Nachteilig an diesen Werkzeugen ist die Rückstellung des Werkzeuges für den erneuten Gebrauch, weil diese üblicherweise sehr viel Zeit in Anspruch nimmt. US 4 114 484 A offenbart ein Werkzeug gemäß dem Oberbegriff des Anspruchs 1.

### DARSTELLUNG DER ERFINDUNG

Ausgehend von diesem Stand der Technik liegt der Erfindung eine Aufgabe zugrunde, ein Werkzeug anzugeben, das die Nachteile des Standes der Technik überwindet. Eine besonders bevorzugte Aufgabe ist es, ein Werkzeug anzugeben, welches sich nach Gebrauch schneller rückstellen lässt.

Diese Aufgabe wird durch das Werkzeug nach Anspruch 1 gelöst. Demgemäss umfasst ein Werkzeug zur spanabhebenden Bearbeitung eines Rohrendes eine Schneideinheit mit einer Schneidklinge, welche Schneidklinge der spanabhebenden Bearbeitung dient, eine Klemmeinheit mit Klemmbacken zur Klemmung des Werkzeuges zum Rohrende, eine Antriebseinheit zur Betätigung der Schneideinheit, wobei die Antriebseinheit derart ausgebildet ist, dass die Schneidklinge schraubenlinienförmig um eine Mittelachse bewegbar ist. Die Antriebseinheit weist weiter ein Rückstellelement auf, welches Rückstellelement eine Rückstellkraft bereitstellt, mit welcher die Schneidklinge nach erfolgter schraubenlinienförmiger Betätigung entlang einer Rückstellbewegung rückstellbar ist.

Durch dieses Rückstellelement und die entsprechende Bewegung kann eine sehr einfache und vor allem zeitsparende Rückstellung erreicht werden.

Unter einer "schraubenlinienförmigen Bewegung" wird eine kombinierte Bewegung um die Mittelachse herum und in Richtung der Mittelachse verstanden.

Die Schneidklinge dient im Wesentlichen der Bearbeitung der äusseren Mantelfläche des Rohrendes. Die Schneidklinge ist vorzugsweise derart angeordnet, dass ausschliesslich die äussere Mantelfläche des Rohrendes bearbeitbar ist.

Mit der Klemmeinheit lässt sich das Werkzeug zum Rohrende festklemmen, so dass sich nur die Teile des Werkzeuges zum Rohrende bewegen können, welche für die Bearbeitung desselben von Relevanz sind.

Vorzugsweise erfolgt die Rückstellung ausschliesslich in eine Richtung parallel zur Mittelachse. Es handelt sich dabei um eine geradlinige Bewegung. Das heisst, eine schraubenlinienförmige Betätigung der Schneideinheit bzw. der Schneidklinge ist nicht nötig.

Vorzugsweise umfasst die Antriebseinheit eine sich in Richtung der Mittelachse erstreckende und bezüglich einer Rotation um die Mittelachse fest zu den Klemmbacken stehende Gewindestange und eine die Gewindestange teilweise umgebende Gewindemutter, wobei die Gewindemutter die besagte schraubenlinienförmige Bewegung auf die Schneidklinge bewirkt. Die Gewindemutter rotiert dabei um die Gewindestange.

Vorzugsweise ist die Gewindemutter mit einer Betätigung quer zur Gewindestange bzw. zur Mittelachse ausser Eingriff mit der Gewindestange bringbar, derart, dass die besagte Rückstellbewegung ausführbar ist.

Unter der Ausdrucksweise teilweise umgebende Gewindemutter wird verstanden, dass die Gewindemutter die Gewindestange zu maximal 180° umgibt, so dass die Gewindemutter quer zur Gewindestange bzw. zur Mittelachse ausser Eingriff mit der Gewindestange bringbar ist.

Vorzugsweise wird die Gewindemutter mit einer Feder gegen die Gewindestange gedrückt. Bei Aufheben der Verbindung zwischen Gewindemutter und Gewindestange muss eine entsprechende gegen die Feder wirkende Kraft bereitgestellt werden.

Vorzugsweise weist das Werkzeug ein Gehäuse mit mindestens einem hohlzylindrischen Gehäuseabschnitt auf, wobei die Schneideinheit am hohlzylindrischen Gehäuseabschnitt angeordnet ist. Das Gehäuse ist bei der Betätigung schraubenlinienförmig um die Mittelachse bewegbar.

Vorzugsweise sind innenseitig zum hohlzylindrischen Gehäuseabschnitt Gleitelemente angeordnet, welche in Kontakt mit der Aussenseite des zu bearbeitenden Rohrendes bringbar sind, wobei die Gleitelemente vorzugsweise austauschbar ausgebildet sind.

Besonders bevorzugt sind mindestens ein oder mindestens drei oder mehr von den Gleitelementen vorhanden.

Vorzugsweise stehen die Gleitelement in gleichem Abstand zueinander.

Besonders bevorzugt ist mindestens eines der Gleitelemente bezüglich der Mittelachse gesehen, diametral gegenüber der Schneideinheit, insbesondere der Schneidklinge angeordnet.

Vorzugsweise schliesst sich dem hohlzylindrischen Abschnitt ein weiterer Gehäuseabschnitt an.

Vorzugsweise ist stirnseitig gegenüber des hohlzylindrischen Abschnittes ein Antriebselement am weiteren Gehäuseabschnitt angeordnet. Der Antriebsabschnitt ist beispielsweise ein Schaft, welcher in ein Bohrfutter einer Bohrmaschine eingespannt werden kann. Der Schaft kann in seinem Querschnitt rund oder sechskantig sein.

Vorzugsweise weist der weitere Gehäuseabschnitt eine Rückstelltaste auf, über welche die besagte Rückstellung einleitbar ist. Die Rückstelltaste wirkt vorzugsweise auf die Gewindemutter und drückt diese quer zur Mittelachse weg, so dass der Eingriff zwischen Gewindemutter und Gewindestange aufhebbar ist und das Rückstellelement die Rückstellkraft bereitstellen kann.

Vorzugsweise wirkt das Antriebselement auf das Gehäuse und auf die mit dem Gehäuse in Verbindung stehende Gewindemutter.

Vorzugsweise sind die Klemmbacken gefedert zu einem Supportelement ausgebildet, wobei das Supportelement drehbar mit Teilen der Antriebseinheit in Verbindung steht.

Besonders bevorzugt steht das Supportelement fest mit der Gewindestange in Verbindung. Das Supportelement bildet somit die Basis für die Klemmbacken und die Gewindestange.

Vorzugsweise sind die Klemmbacken in Ausgangslage gesehen im Wesentlichen im Inneren des hohlzylindrischen Gehäuseabschnittes angeordnet. Hierbei kann eine besonders kompakte Struktur erreicht werden. Da sich das Gehäuse beim Bearbeitungsvorgang relativ zu den Klemmbacken verschiebt, treten diese bei zunehmender Bearbeitung aus dem hohlzylindrischen Gehäuseabschnitt hinaus.

Vorzugsweise umfasst die Schneideinheit ein Federelement, mit welchem Federelement die Schneidklinge gefedert ausgebildet ist, wobei das Federelement eine quer zur Mittelachse auf die Mittelachse zu wirkende Kraft bereitstellt.

Vorzugsweise ist die Schneidklinge vor und während der Rückstellung von der Mittelachse weg bewegbar ist.

Vorzugsweise bewirkt die Rückstelltaste über ein Betätigungselement eine Kraft auf die Schneidklinge, so dass diese radial nach aussen verschwenkt wird. Somit kann die Schneidklinge von der zu bearbeitenden oder von der bearbeiteten Fläche am Rohr angehoben werden.

Vorzugsweise ist die Schneideinheit für einen Wechsel der Schneidklinge von der Mittelachse her gesehen nach aussen klappbar, wobei vorzugsweise ein Sicherungselement die Schneideinheit sichert, wobei das Sicherungselement für den Wechsel der Schneidklinge entfernbar ist.

Vorzugsweise ist die Schneideinheit über einen Bolzen schwenkbar mit dem Gehäuse in Verbindung.

Ein Verfahren zum Betrieb eines Werkzeuges nach obiger Beschreibung ist dadurch gekennzeichnet,
dass in einem ersten Schritt das Werkzeug auf dem Rohrende platziert und mit der Klemmeinheit geklemmt wird,
dass in einem zweiten Schritt die Antriebseinheit mit einer Drehbewegung beaufschlagt wird, wobei die Schneideinheit gegen das Rohrende hin bewegt wird, und
dass in einem dritten Schritt das Werkzeug zurückgestellt wird.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Schnittdarstellung einer Ausführungsform des Werkzeuges vor der Bearbeitung des Rohrendes;
- Fig. 2: eine Schnittdarstellung einer Ausführungsform des Werkzeuges nach der Bearbeitung des Rohrendes;
- Fig. 3: eine perspektivische Ansicht der Figur 1;
- Fig. 4: eine perspektivische Ansicht der Figur 2;
- Fig. 5: eine weitere perspektivische Ansicht des Werkzeuges nach den vorhergehenden Figuren; und
- Fig. 6: eine Explosionsdarstellung der Schneideinheit.

### BESCHREIBUNG BEVORZUGTER AUSFÜHRUNGSFORMEN

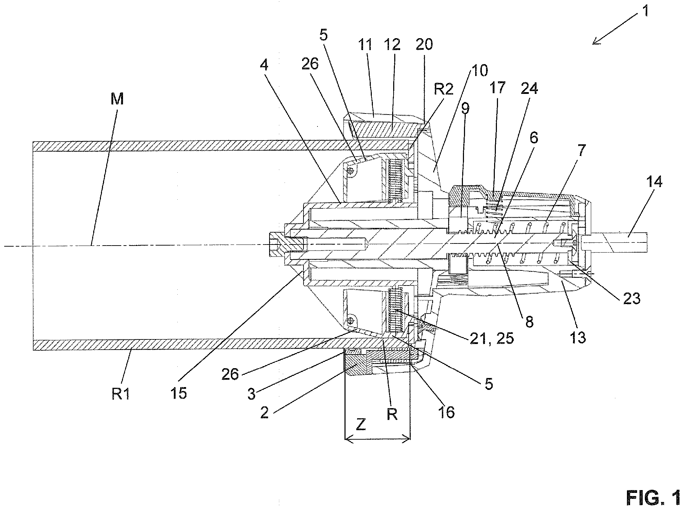

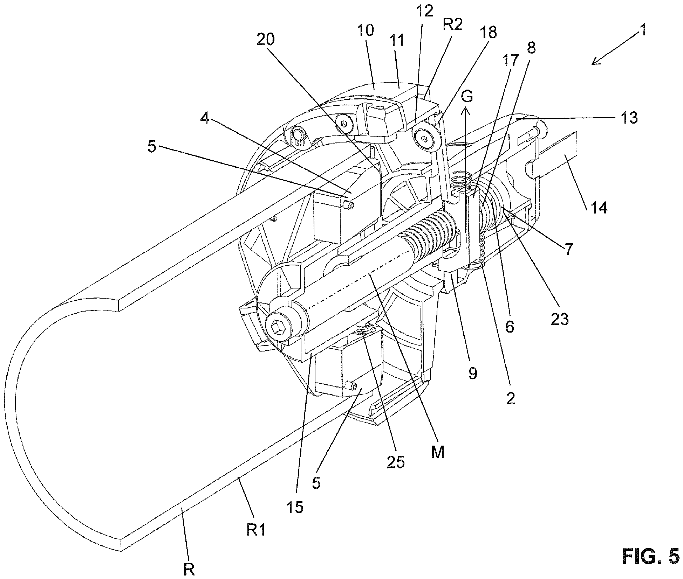

In den Figuren 1 bis 6 wird ein Werkzeug 1 zur spanabhebenden Bearbeitung eines Rohrendes R gezeigt. Mit dem Werkzeug kann die Mantelfläche R1 des Rohrendes R bearbeitet werden. Insbesondere kann die Mantelfläche spanabhebend bearbeitet werden, so dass eine gut verschweissbare Fläche entsteht. Die Fläche ist vorzugsweise zylindrisch.

Das Werkzeug 1 umfasst eine Schneideinheit 2 mit einer Schneidklinge 3, welche Schneidklinge 3 der spanabhebenden Bearbeitung des Rohrendes R dient, eine Klemmeinheit 4 mit Klemmbacken 5 zur Klemmung des Werkzeuges 1 zum Rohrende R, und eine Antriebseinheit 6 zur Betätigung der Schneideinheit 2. Die Antriebseinheit 6 ist dabei derart ausgebildet, dass die Schneidklinge 3 schraubenlinienförmig um die Mittelachse M des Rohrendes R bewegbar ist. Die Schneidklinge 3 ist derart angeordnet, dass die Aussenfläche bzw. die Mantelfläche R1 des Rohrendes R bearbeitet werden kann. Dabei wird der Aussendurchmesser des Rohrendes R aufgrund der Bearbeitung leicht verkleinert.

Weiter umfasst die Antriebseinheit 6 ein Rückstellelement 7. Das Rückstellelement 7 stellt eine Rückstellkraft F bereit. Mit der Rückstellkraft F lässt sich die Schneidklinge 3 nach erfolgter schraubenlinienförmiger Betätigung entlang einer Rückstellbewegung in die Ausgangslage rückstellen.

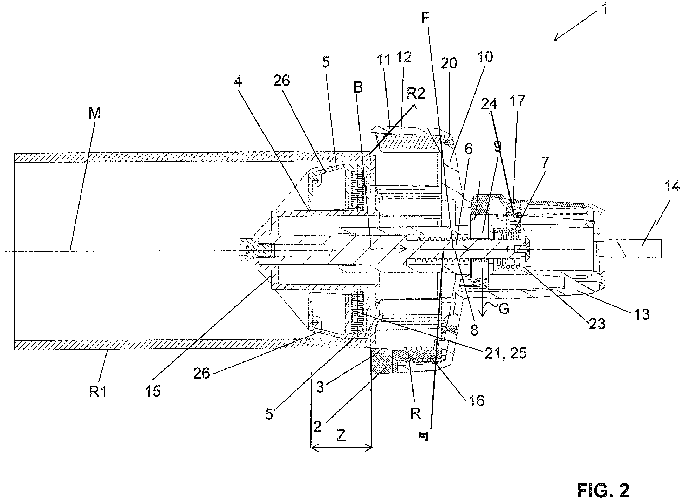

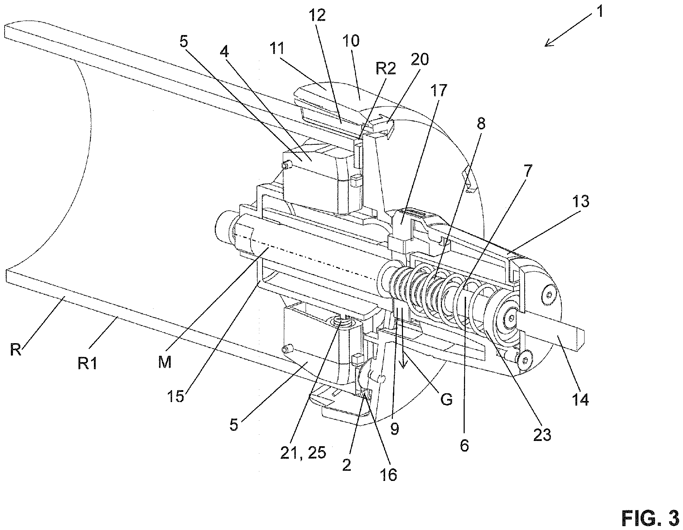

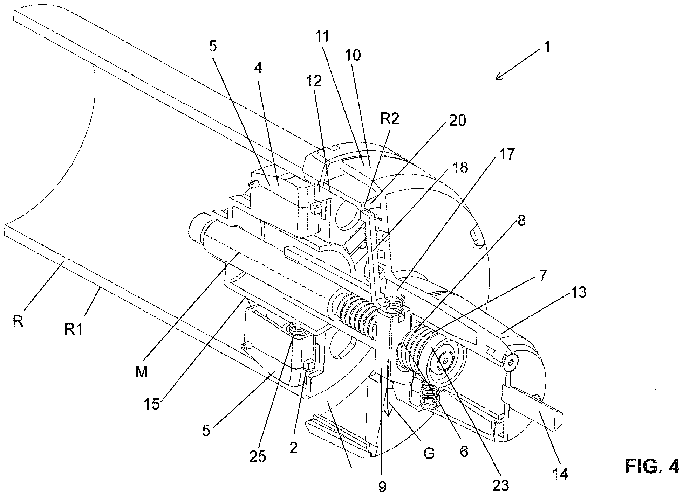

In den Figuren 1 und 3 wird das Werkzeug 1 zur spanabhebenden Bearbeitung des Rohrendes R in der Ausgangslage gezeigt. Von dieser Ausgangslage wird das Werkzeug 1 bei Betätigung betätigt und die Schneideinheit 2 verschiebt sich mit der Schneidklinge 3 schraubenlinienförmig um die Mittelachse M bis die Endlage, die in den Figuren 2 und 4 gezeigt wird, erreicht wird. Nach erfolgter Betätigung hat die Schneidklinge 3 das Rohrende R über den eingezeichneten Bereich Z bearbeitet.

Die Bearbeitung erfolgt dabei zur Stirnseite R2 des Rohrendes R hin. Das heisst, bei zunehmender Bearbeitung wird der Abstand zwischen der Stirnseite R2 und Schneidklinge 3 kleiner. Das hat den Vorteil, dass die Schneidklinge 3 nach erfolgter Betätigung nicht mehr über die bearbeitete Fläche bewegt werden muss. Letzteres könnte zu einer Beschädigung derselben führen.

Nach erfolgter Betätigung wird über das Rückstellelement 7 eine Rückstellkraft F bereitgestellt, so dass die Schneideinheit 2 mit der Schneidklinge 3 wieder in die in der Figur 1 gezeigten Ausgangslage zurückgestellt wird.

Die Rückstellbewegung B erfolgt ausschliesslich in eine Richtung parallel zur Mittelachse M. Das heisst, die Rückstellbewegung erfolgt parallel zur Mittelachse M ohne eine Drehung um dieselbe. Hierdurch kann eine sehr schnelle Rückstellung erreicht werden. Das Werkzeug 1 ist nach kurzer Zeit wieder einsatzbereit.

In der gezeigten Ausführungsform wird das Rückstellelement 7 durch eine Spiralfeder bereitgestellt, welche eine entsprechende Rückstellkraft bereitstellt.

Die Antriebseinheit 6 umfasst in der gezeigten Ausführungsform eine sich in Richtung der Mittelachse M erstreckende und bezüglich einer Rotation um die Mittelachse M fest zu den Klemmbacken 5 stehende Gewindestange 8 und eine die Gewindestange 8 teilweise umgebende Gewindemutter 9. Die Gewindemutter 9 steht über ein Gehäuse 10 mit der Schneidklinge 3 in Verbindung. Über die Gewindemutter 9 ist die besagte schraubenlinienförmige Bewegung auf die Schneidklinge 3 bereitstellbar. Im Betrieb heisst dies, dass die Gewindemutter 9, beispielsweise mit einem Bohrwerkzeug, um die Mittelachse M bewegt wird, wodurch aufgrund des Eingriffs in die Gewindestange 8 die besagte schraubenlinienförmige Betätigung der Bewegung der Schneidklinge resultiert. Die Gewindemutter 9 steht dabei rotationsfest zur Schneidklinge 3, so dass bei einer Rotation der Gewindemutter 9 zur Gewindestange 8 auch die Schneidklinge 3 entsprechend bewegt wird.

Die Gewindemutter 9 ist, wie bereits erwähnt, derart ausgebildet, dass diese die Gewindestange 8 nur teilweise umgibt. Vorzugsweise ist der Umschliessungswinkel der Gewindemutter 9 um die Gewindestange 8 maximal bzw. kleiner als 180 Grad. Dadurch ist die Gewindemutter 9 mit einer Betätigung quer zur Gewindestange 8 bzw. zur Mittelachse M ausser Eingriff mit der Gewindestange 8 bringbar. Das heisst bei der Rückstellbewegung wird die Gewindemutter 9 quer zur Gewindestange 8 bewegt und der Eingriff zwischen Gewindemutter 9 und Gewindestange 8 wird aufgehoben. Der Eingriff wird dabei derart aufgehoben, dass die Gewindemutter 9 nicht mehr im Eingriff mit der Gewindestage 8 ist. Hierdurch kann dann das Rückstellelement 7 eine entsprechende Betätigungskraft aufbringen, sodass die Gewindemutter 9 entlang der Rückstellbewegung bewegbar ist. Die Bewegung der Gewindemutter 8 wird in der Figur 2 mit einem Pfeil G gezeigt.

In der gezeigten Ausführungsform umfasst das Werkzeug 1 ein Gehäuse 10 mit mindestens einem hohlzylinderischem Gehäuseabschnitt 11. Die Schneideinheit 2 ist dabei am hohlzylinderischen Gehäuseabschnitt 11 angeordnet. Bei der Betätigung ist das Gehäuse 10 schraubenlinienförmig um die Mittelachse M bewegbar.

Das heisst bezüglich der Anordnung der Gewindemutter 9, dass diese, abgesehen von der Betätigungsbewegung quer zu Gewindestange 8 für den Rückstellzweck fest zum Gehäuse 10 angeordnet ist. Das heisst, die Gewindemutter 9 ist nicht zum Gehäuse verdrehbar oder entlang der Mittelachse M zum Gehäuse verschieblich angeordnet. Bei einer Drehung des Gehäuses um die Mittelachse M wird ebenfalls die Gewindemutter 9 verdreht, wodurch es zur besagten schraubenlinienförmigen Bewegung kommt.

Im hohlzylindrischen Gehäuseabschnitt 11 sind Gleitelemente 12 angeordnet. Die Gleitelemente 12 sind in Kontakt mit der Aussenseite R1 des zu bearbeitenden Rohrendes R. Die Gleitelemente 12 sind vorzugsweise austauschbar angeordnet. Das heisst, dass bei einem verschlissenem Gleitelement ein Austausch vorgenommen werden kann. In der gezeigten Ausführungsform lassen sich die Gleitelemente 12 in Richtung der Mittelachse M über einen Betätigungsabschnitt 20 aus der Halterung im hohlzylindrischen Gehäuseabschnitt 11 hinausdrücken.

Im hohlzylindrischen Abschnitt 11 schliesst sich ein weiterer Gehäuseabschnitt 13 an. Stirnseitig gegenüber dem hohlzylindrischen Abschnitt 11 ist am weiteren Gehäuseabschnitt 13 ein Antriebselement 14 angeordnet. Das Antriebselement 14 hat hier die Form eines sechskantigen Ansatzes. Über dieses Antriebselement 14 kann eine Drehbewegung auf das Gehäuse 10 und somit auf die fest im Gehäuse 10 angeordnete Gewindemutter 9 beaufschlagt werden. Hierdurch kann die besagte schraubenlinienförmige Betätigung erreicht werden. Das Antriebselement 14 wirkt also auf das Gehäuse 10 und auf die mit dem Gehäuse 10 in Verbindung stehende Gewindemutter 9.

Am Gehäuse 10 ist weiterhin eine Rückstelltaste 17 gelagert. Über die Rückstelltaste 17 kann die besagte Rückstellung des Werkzeuges 1 eingeleitet werden. In den Figuren 1 und 2 sowie 3 und 4 kann gut erkannt werden, dass die Rückstelltaste 17 auf die Gewindemutter 9 wirkt und diese aus dem Eingriff mit der Gewindestange 8 bewegt. Die Gewindemutter 9 wird, wie in der Figur 2 gezeigt, entlang der Bewegung G aus dem Eingriff mit der Gewindestange 8 gebracht. Sobald kein Eingriff zwischen Gewindemutter 9 und Gewindestange 8 vorliegt, entfaltet das Rückstellelement 7 sein volle Wirkung und stellt die Rückstellkraft bereit. Mit Blick auf die Figur 2 heisst dies, dass die Klemmeinheit 4 relativ zur Schneideinheit 2 wieder in die Ausgangslage, so wie in der Figur 1 gezeigt, bewegt wird.

Die Rückstelltaste 17 wird über eine Druckfeder 24 in ihrer Ausgangslage gehalten. Die Rückstelltaste 17 wird gegen die Federkraft der Druckfeder 24 bewegt.

Das Rückstellelement 7 weist hier die Form einer Druckfeder auf. Die Druckfeder steht an einem drehfest zur Gewindestange 8 angeordnetem Anschlag 23 und an der Gewindemutter 8 an. Mit zunehmender Betätigung des Werkzeuges wird der Abstand zwischen dem Anschlag 23 und der Gewindemutter 8 kleiner, wodurch die Druckfeder 7 gespannt wird. In der Figur 1 ist die Druckfeder im entspannten Zustand und in der Figur 2 ist die Druckfeder im gespannten Zustand gezeigt. Die Druckfeder entspannt sich und stellt die Rückstellkraft auf die Gewindemutter 8 bereit, sobald der Eingriff zwischen Gewindemutter 8 und Gewindestange 9 aufgehoben wurde.

Die Druckfeder ist hier im weiteren Gehäuseabschnitt 13 gelagert.

Die Klemmbacken 5 sind mit einer Druckfeder 21 gefedert zu einem Supportelement 15 ausgebildet. Die Klemmbacken 5 sind dabei schwenkbar zum Supportelement 15 angeordnet und werden durch Federelemente 25 an die Rohrinnenwandung gedrückt. Klemmbacken 5 und Supportelement 15 sind dabei Teil der Klemmeinheit 4. Das Supportelement 15 steht in der gezeigten Ausführungsform fest mit Teilen der Antriebseinheit 6 in Verbindung. Namentlich steht das Supportelement 15 fest mit der Gewindestange 8 in Verbindung. Bei einer Betätigung steht also die Klemmeinheit 4 mit den Klemmbacken 5 sowie mit dem Supportelement 15 und der Gewindestange 8 der Antriebseinheit 6 fest zum Rohrende R. Das heisst, die Teile sind unbeweglich zum Rohrende R. Demgegenüber bewegen sich das Gehäuse 10, die Schneideinheit 2 mit der Schneidklinge 3, die Gewindemutter 9 und das Antriebselement 14 um die Mittelachse M. Aufgrund des Eingriffes zwischen Gewindemutter 9 und Gewindestange 8 resultiert die besagte schraubenlinien- oder spirallinienförmige Betätigung.

Nach vorne hin sind die Klemmbacken 5 mit einer winklig zur Mittelachse geneigt ausgebildeten Anfasung 26 versehen. Die Anfasung 26 dient dem leichten Einschieben der Klemmbacken in das Rohrende R.

In der gezeigten Ausführungsform sind sechs Klemmbacken 5 in gleichen Abständen zueinander angeordnet. Die Zahl der Klemmbacken kann grösser oder kleiner sein.

Die Schneideinheit 2 umfasst weiterhin ein Federelement 16. Mit dem Federelement 16 ist die Schneidklinge 3 gefedert ausgebildet. Mit dem Federelement 16 lässt sich die Schneidklinge 3 auf die Aussenseite R1 des Rohrendes R drücken. Das heisst, dass Federelement 16 stellt eine quer zur Mittelachse M auf die Mittelachse M zu wirkende Kraft bereit. Die Schneidklinge 3 ist vor und während der Rückstellung von der Mittelachse M weg bewegbar. Hierdurch wird über ein Betätigungselement 18 eine Kraft auf die Schneidklinge 3 bewirkt. Das Betätigungselement 18 wird bei einer Betätigung der besagten Rückstelltaste 17 betätigt, wobei dann die Schneidklinge 3 von der Aussenseite des Rohrendes R weggedrückt wird.

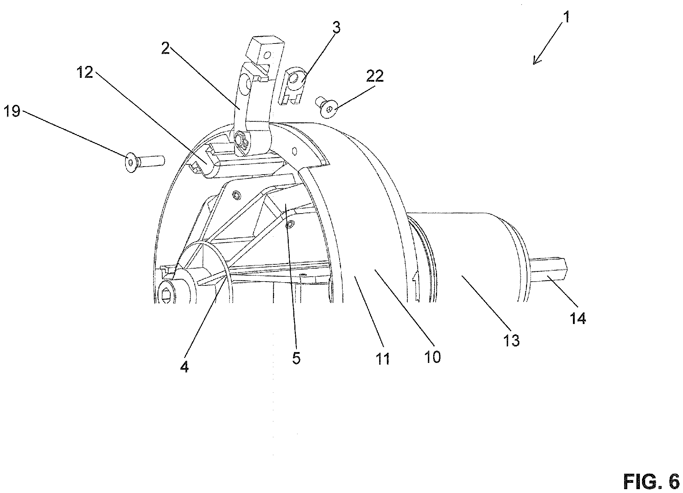

In der Figur 6 wird der Wechsel der Schneidklinge 3 gezeigt. Für den Wechsel der Schneidklinge 3 ist die Schneideinheit 2 von der Mittelachse M hergesehen nach aussen klappbar. Ein optionales Sicherungselement 19 sichert dabei die Schneidklinge 2 in deren Gebrauchsposition. Für die Bewegung der Schneideinheit 2 in die Wechselposition ist das Sicherungselement 19 von der Schneidklinge 3 entfernbar. Dadurch lässt sich die Schneideinheit 2 vom hohlzylindrischen Gehäuseabschnitt 11 wegbewegen. Sodann wird Zugang zur Schneidklinge 3 geschaffen. Die Schneidklinge 3 ist hier mit einer Schraube 22 zur Schneideinheit 2 gesichert.

**BEZUGSZEICHENLISTE**

| | | | |
|---|---|---|---|
| 1 | Werkzeug | 19 | Sicherungselement |
| 2 | Schneideinheit | 20 | Betätigungsabschnitt |
| 3 | Schneidklinge | 21 | Druckfeder |
| 4 | Klemmeinheit | 22 | Schraube |
| 5 | Klemmbacken | 23 | Anschlag |
| 6 | Antriebseinheit | 24 | Druckfeder |
| 7 | Rückstellelement | 25 | Federelemente |
| 8 | Gewindestange | 26 | Anfasung |
| 9 | Gewindemutter | | |
| 10 | Gehäuse | | |
| 11 | hohlzylindrischer Gehäuseabschnitt | B | Rückstellbewegung |
| | | F | Rückstellkraft |
| 12 | Gleitelemente | G | Bewegung Gewindemutter |
| 13 | weiterer Gehäuseabschnitt | R | Rohrende |
| 14 | Antriebselement | R1 | Aussenseite |
| 15 | Supportelement | R2 | Stirnseite |
| 16 | Federelement | Z | Bearbeitungsbereich |
| 17 | Rückstelltaste | | |
| 18 | Betätigungselement | | |

## Patentansprüche

1. Werkzeug (1) zur spanabhebenden Bearbeitung eines Rohrendes (R) umfassend
eine Schneideinheit (2) mit einer Schneidklinge (3), welche Schneidklinge (3) der spanabhebenden Bearbeitung dient,
eine Klemmeinheit (4) mit Klemmbacken (5) zur Klemmung des Werkzeuges (1) zum Rohrende (R),
eine Antriebseinheit (6) zur Betätigung der Schneideinheit (2), wobei die Antriebseinheit (6) derart ausgebildet ist, dass die Schneidklinge (3) schraubenlinienförmig um eine Mittelachse (M) bewegbar ist,
**dadurch gekennzeichnet, dass** die Antriebseinheit (6) ein Rückstellelement (7) aufweist, welches Rückstellelement (7) eine Rückstellkraft (F) bereitstellt, mit welcher die Schneidklinge (3) nach erfolgter schraubenlinienförmiger Betätigung entlang einer Rückstellbewegung (B) rückstellbar ist.

2. Werkzeug (1) nach Anspruch 1, **dadurch gekennzeichnet, dass** die Rückstellbewegung (B) ausschliesslich in eine Richtung parallel zur Mittelachse (M) erfolgt.

3. Werkzeug (1) nach Anspruch 1 oder 2, **dadurch gekennzeichnet, dass** die Antriebseinheit (6) eine sich in Richtung der Mittelachse (M) erstreckende und bezüglich einer Rotation um die Mittelachse (M) fest zu den Klemmbacken (5) stehende Gewindestange (8) und eine die Gewindestange (8) teilweise umgebende Gewindemutter (9) aufweist, wobei die Gewindemutter (9) die besagte schraubenlinienförmige Bewegung auf die Schneidklinge (3) bewirkt.

4. Werkzeug (1) nach Anspruch 3, **dadurch gekennzeichnet, dass** die Gewindemutter (9) mit einer Betätigung quer zur Gewindestange (8) bzw. zur Mittelachse (M) ausser Eingriff mit der Gewindestange (8) bringbar ist, derart, dass die besagte Rückstellbewegung (B) ausführbar ist.

5. Werkzeug (1) nach einem der vorhergehenden Ansprüche, **dadurch gekennzeichnet, dass** das Werkzeug (1) ein Gehäuse (10) mit mindestens einem hohlzylindrischen Gehäuseabschnitt (11) aufweist, wobei die Schneideinheit (2) am hohlzylindrischen Gehäuseabschnitt (11) angeordnet ist, wobei das Gehäuse (10) bei der Betätigung schraubenlinienförmig um die Mittelachse (M) bewegbar ist.

6. Werkzeug (1) nach Anspruch 5, **dadurch gekennzeichnet, dass** innenseitig zum hohlzylindrischen Gehäuseabschnitt (11) Gleitelemente (12) angeordnet sind, welche in Kontakt mit der Aussenseite des zu bearbeitenden Rohrendes (R1) bringbar sind, wobei die Gleitelemente (12) vorzugsweise austauschbar ausgebildet sind.

7. Werkzeug (1) nach einem der Ansprüche 5 oder 6, **dadurch gekennzeichnet, dass** sich dem hohlzylindrischen Abschnitt (11) ein weiterer Gehäuseabschnitt (13) anschliesst, wobei stirnseitig gegenüber des hohlzylindrischen Abschnittes (11) ein Antriebselement (14) angeordnet ist, und/oder wobei der weitere Gehäuseabschnitt (13) eine Rückstelltaste (17) aufweist, über welche die besagte Rückstellung einleitbar ist.

8. Werkzeug nach Anspruch 7, **dadurch gekennzeichnet, dass** das Antriebselement (14) auf das Gehäuse (10) und auf die mit dem Gehäuse (10) in Verbindung stehende Gewindemutter (9) wirkt.

9. Werkzeug (1) nach einem der vorhergehenden Ansprüche, **dadurch gekennzeichnet, dass** die Klemmbacken (5) gefedert zu einem Supportelement (15) ausgebildet sind, wobei das Supportelement (15) drehfest mit Teilen der Antriebseinheit (6) in Verbindung steht.

10. Werkzeug (1) nach Anspruch 8 und einem der Ansprüche 3 oder 4, wenn Anspruch 5 nicht vom Anspruch 3 und Anspruch 4 abhängig wird, **dadurch gekennzeichnet, dass** das Supportelement (15) fest mit der Gewindestange (8) in Verbindung steht.

11. Werkzeug (1) nach einem der vorhergehenden Ansprüche, **dadurch gekennzeichnet, dass** die Schneideinheit (2) ein Federelement (16) umfasst, mit welchem Federelement (16) die Schneidklinge (3) gefedert ausgebildet ist, wobei das Federelement (16) eine quer zur Mittelachse (M) auf die Mittelachse (M) zu wirkende Kraft bereitstellt.

12. Werkzeug (1) nach einem der vorhergehenden Ansprüche, **dadurch gekennzeichnet, dass** die Schneidklinge (3) vor und während der Rückstellung von der Mittelachse (M) weg bewegbar ist.

13. Werkzeug (1) nach Anspruch 12 und nach Anspruch 7 wenn Anspruch 12 nicht vom Anspruch 7 abhängig wird, **dadurch gekennzeichnet, dass** die Rückstelltaste (17) über ein Betätigungselement (18) eine Rückstellkraft auf die Schneidklinge (3) bewirkt.

14. Werkzeug (1) nach einem der vorhergehenden Ansprüche, **dadurch gekennzeichnet, dass** die Schneideinheit (2) für einen Wechsel der Schneidklinge (3) von der Mittelachse (M) her gesehen nach aussen klappbar ist, wobei vorzugsweise ein Sicherungselement (19) die Schneideinheit (2) sichert, wobei das Sicherungselement (19) für den Wechsel der Schneidklinge (3) entfernbar ist.

15. Verfahren zum Betrieb eines Werkzeuges nach einem der vorhergehenden Ansprüche, **dadurch gekennzeichnet,**
**dass** in einem ersten Schritt das Werkzeug (1) auf dem Rohrende (R) platziert und mit der Klemmeinheit (4) geklemmt wird,
**dass** in einem zweiten Schritt die Antriebseinheit (6) mit eine Drehbewegung beaufschlagt wird, wobei die Schneideinheit (2) gegen das Rohrende (R) hin bewegt wird, und
**dass** in einem dritten Schritt das Werkzeug (1) zurückgestellt wird.

## Claims

1. Tool (1) for machining a tube end (R), comprising
a cutting unit (2) with a cutting blade (3), which cutting blade (3) serves for machining,
a clamping unit (4) with clamping jaws (5) for clamping the tool (1) with respect to the tube end (R),
a drive unit (6) for actuating the cutting unit (2), wherein the drive unit (6) is designed in such a way that the cutting blade (3) can be moved helically about a centre axis (M),
**characterized in that** the drive unit (6) has a resetting element (7), which resetting element (7) provides a resetting force (F) with which, after helical actuation has occurred, the cutting blade (3) can be reset along a resetting movement (B).

2. Tool (1) according to Claim 1, **characterized in that** the resetting movement (B) occurs exclusively in a direction parallel to the centre axis (M).

3. Tool (1) according to Claim 1 or 2, **characterized in that** the drive unit (6) has a threaded rod (8), which extends in the direction of the centre axis (M) and is fixed in relation to the clamping jaws (5) with respect to a rotation about the centre axis (M), and a threaded nut (9) which partially surrounds the threaded rod (8), wherein the threaded nut (9) produces said helical movement on the cutting blade (3).

4. Tool (1) according to Claim 3, **characterized in that** the threaded nut (9) can be disengaged from the threaded rod (8) with an actuation transversely with respect to the threaded rod (8) or with respect to the centre axis (M) in such a way that said resetting movement (B) can be carried out.

5. Tool (1) according to one of the preceding claims, **characterized in that** the tool (1) has a housing (10) with at least one hollow cylindrical housing portion (11), wherein the cutting unit (2) is arranged on the hollow cylindrical housing portion (11), wherein the housing (10) can be moved helically about the centre axis (M) during the actuation.

6. Tool (1) according to Claim 5, **characterized in that** sliding elements (12) are arranged on the inner side with respect to the hollow cylindrical housing portion (11) and can be brought into contact with the outer side of the tube end (R1) to be machined, wherein the sliding elements (12) are preferably designed to be interchangeable.

7. Tool (1) according to either of Claims 5 and 6, **characterized in that** the hollow cylindrical portion (11) is adjoined by a further housing portion (13), wherein a drive element (14) is arranged at the end side with respect to the hollow cylindrical portion (11), and/or wherein the further housing portion (13) has a resetting button (17) via which said resetting can be initiated.

8. Tool according to Claim 7, **characterized in that** the drive element (14) acts on the housing (10) and on the threaded nut (9), which is connected to the housing (10) .

9. Tool (1) according to one of the preceding claims, **characterized in that** the clamping jaws (5) are designed to be sprung with respect to a support element (15), wherein the support element (15) is connected to parts of the drive unit (6) in a rotationally fixed manner.

10. Tool (1) according to Claim 8 and either of Claims 3 and 4 if Claim 5 is not dependent on Claim 3 and Claim 4, **characterized in that** the support element (15) is fixedly connected to the threaded rod (8).

11. Tool (1) according to one of the preceding claims, **characterized in that** the cutting unit (2) comprises a spring element (16), with which spring element (16) the cutting blade (3) is of sprung design, wherein the spring element (16) provides a force which is to act on the centre axis (M) transversely with respect to the centre axis (M).

12. Tool (1) according to one of the preceding claims, **characterized in that** the cutting blade (3) can be moved away from the centre axis (M) before and during the resetting.

13. Tool (1) according to Claim 12 and according to Claim 7 if Claim 12 is not dependent on Claim 7, **characterized in that** the resetting button (17) produces a resetting force on the cutting blade (3) via an actuating element (18).

14. Tool (1) according to one of the preceding claims, **characterized in that**, for a change of the cutting blade (3), the cutting unit (2) can be folded outwards as viewed from the centre axis (M), wherein preferably a securing element (19) secures the cutting unit (2), wherein the securing element (19) can be removed for the change of the cutting blade (3).

15. Method for operating a tool according to one of the preceding claims, **characterized**
**in that**, in a first step, the tool (1) is placed on the tube end (R) and clamped with the clamping unit (4),
**in that**, in a second step, a rotary movement is applied to the drive unit (6), wherein the cutting unit (2) is moved towards the tube end (R), and
**in that**, in a third step, the tool (1) is reset.

## Revendications

1. Outil (1) d'usinage par enlèvement de copeaux d'une extrémité de tube (R), comportant
une unité de coupe (2) dotée d'une lame de coupe (3), laquelle lame de coupe (3) sert à l'usinage par enlèvement de copeaux,
une unité de serrage (4) dotée de mâchoires de serrage (5) pour le serrage de l'outil (1) par rapport à l'extrémité de tube (R),
une unité d'entraînement (6) pour l'actionnement de l'unité de coupe (2), dans lequel l'unité d'entraînement (6) est réalisée de telle sorte que la lame de coupe (3) est déplaçable de manière hélicoïdale autour d'un axe médian (M),
**caractérisé en ce que** l'unité d'entraînement (6) comprend un élément de rappel (7), lequel élément de rappel (7) produit une force de rappel (F) à l'aide de laquelle la lame de coupe (3) peut être rappelée le long d'un déplacement de rappel (B) une fois que l'actionnement hélicoïdal a été effectué.

2. Outil (1) selon la revendication 1, **caractérisé en ce que** le déplacement de rappel (B) s'effectue exclusivement dans une direction parallèle à l'axe médian (M) .

3. Outil (1) selon la revendication 1 ou 2, **caractérisé en ce que** l'unité d'entraînement (6) comprend une tige filetée (8) s'étendant dans la direction de l'axe médian (M) et située de manière fixe par rapport aux mâchoires de serrage (5) par rapport à une rotation autour de l'axe médian (M) et un écrou fileté (9) entourant partiellement la tige filetée (8), l'écrou fileté (9) provoquant ledit déplacement hélicoïdal sur la lame de coupe (3).

4. Outil (1) selon la revendication 3, **caractérisé en ce que** l'écrou fileté (9) peut, par un actionnement transversalement à la tige filetée (8) ou à l'axe médian (M), être amené hors de prise avec la tige filetée (8), de telle sorte que ledit déplacement de rappel (B) peut être effectué.

5. Outil (1) selon l'une des revendications précédentes, **caractérisé en ce que** l'outil (1) comprend un boîtier (10) doté d'au moins une partie de boîtier (11) cylindrique creuse, l'unité de coupe (2) étant disposée sur la partie de boîtier (11) cylindrique creuse, le boîtier (10) étant déplaçable de manière hélicoïdale autour de l'axe médian (M) lors de l'actionnement.

6. Outil (1) selon la revendication 5, **caractérisé en ce que** des éléments de glissement (12) sont disposés du côté intérieur par rapport à la partie de boîtier (11) cylindrique creuse, lesquels éléments de glissement peuvent être amenés en contact avec le côté extérieur de l'extrémité de tube (R1) à usiner, les éléments de glissement (12) étant réalisés de préférence de manière remplaçable.

7. Outil (1) selon l'une des revendications 5 ou 6, **caractérisé en ce qu'**une autre partie de boîtier (13) se raccorde à la partie (11) cylindrique creuse, un élément d'entraînement (14) étant disposé du côté frontal par rapport à la partie (11) cylindrique creuse, et/ou l'autre partie de boîtier (13) comprenant un bouton de rappel (17) par le biais duquel ledit rappel peut être déclenché.

8. Outil selon la revendication 7, **caractérisé en ce que** l'élément d'entraînement (14) agit sur le boîtier (10) et sur l'écrou fileté (9) en liaison avec le boîtier (10).

9. Outil (1) selon l'une des revendications précédentes, **caractérisé en ce que** les mâchoires de serrage (5) sont réalisées de manière chargée par ressort par rapport à un élément de support (15), l'élément de support (15) étant en liaison solidaire en rotation avec des parties de l'unité d'entraînement (6).

10. Outil (1) selon la revendication 8 et l'une des revendications 3 ou 4, lorsque la revendication 5 ne dépend pas de la revendication 3 et de la revendication 4, **caractérisé en ce que** l'élément de support (15) est en liaison fixe avec la tige filetée (8).

11. Outil (1) selon l'une des revendications précédentes, **caractérisé en ce que** l'unité de coupe (2) comporte un élément ressort (16), à l'aide duquel élément ressort (16) la lame de coupe (3) est réalisée de manière chargée par ressort, l'élément ressort (16) produisant une force agissant transversalement à l'axe médian (M) vers l'axe médian (M).

12. Outil (1) selon l'une des revendications précédentes, **caractérisé en ce que** la lame de coupe (3) est, avant et pendant le rappel, déplaçable à l'écart de l'axe médian (M) .

13. Outil (1) selon la revendication 12 et la revendication 7 lorsque la revendication 12 ne dépend pas de la revendication 7, **caractérisé en ce que** le bouton de rappel (17) produit, par le biais d'un élément d'actionnement (18), une force de rappel sur la lame de coupe (3).

14. Outil (1) selon l'une des revendications précédentes, **caractérisé en ce que** l'unité de coupe (2) est, pour un remplacement de la lame de coupe (3), rabattable vers l'extérieur vue depuis l'axe médian (M), un élément de blocage (19) bloquant de préférence l'unité de coupe (2), l'élément de blocage (19) pouvant être retiré pour le remplacement de la lame de coupe (3).

15. Procédé de fonctionnement d'un outil selon l'une des revendications précédentes, **caractérisé**
**en ce que**, dans une première étape, l'outil (1) est placé sur l'extrémité de tube (R) et est serré à l'aide de l'unité de serrage (4),
**en ce que**, dans une deuxième étape, l'unité d'entraînement (6) est soumise à un déplacement de rotation, l'unité de coupe (2) étant déplacée vers l'extrémité de tube (R), et
**en ce que**, dans une troisième étape, l'outil (1) est rappelé.
